# EUROPÄISCHE PATENTSCHRIFT

(11) **EP 1 012 010 B1**
(45) Veröffentlichungstag und Bekanntmachung des Hinweises auf die Patenterteilung: **12.11.2003**
(21) Anmeldenummer: 98930634.5
(22) Anmeldetag: 08.04.1998
(51) Int. Cl.: B60R 25/00

(54) **VERFAHREN ZUM INITIALISIEREN EINES DIEBSTAHLSCHUTZSYSTEMS EINES KRAFTFAHRZEUGS**
METHOD FOR INITIALIZING A VEHICLE ANTI-THEFT SYSTEM
PROCEDE D'INITIALISATION D'UN SYSTEME ANTIVOL POUR VEHICULE

(30) Priorität: 21.05.1997 DE 19721286
(43) Veröffentlichungstag der Anmeldung: 28.06.2000
(73) Patentinhaber: SIEMENS AKTIENGESELLSCHAFT, 80333 München (DE)
(72) Erfinder: MÜLLER, Norbert, D-93057 Regensburg (DE)
(86) Internationale Anmeldenummer: DE9801008
(87) Internationale Veröffentlichungsnummer: WO98053434

(56) Entgegenhaltungen:
- EP-A- 0 695 675
- EP-A- 0 704 352
- DE-C- 19 526 530

## Beschreibung

Die Erfindung betrifft ein Verfahren zum Initialisieren eines Diebstahlschutzsystems, insbesondere einer Wegfahrsperre eines Kraftfahrzeugs.

Ein bekanntes Diebstahlschutzsystem (DE 195 26 530 C1) weist mehrere Schlüssel auf, durch die vor Benutzen des Kraftfahrzeugs hierfür ein Nachweis der Berechtigung geliefert werden muß. Dies geschieht in einem Dialogverfahren, bei dem vom Kraftfahrzeug ein Anforderungssignal zu einem Schlüssel gesendet wird, der daraufhin sein Codesignal zurücksendet. Das Codesignal wird im Kraftfahrzeug auf seine Berechtigung geprüft. Bei einer Erst-Initialisierung werden in alle, dem Diebstahlschutzsystem zugeordnete Schlüssel und Steuergeräte Codierdaten eingeschrieben.

Wenn im Fahrzeug ein Steuergerät ausgetauscht werden muß, so wird das neue Steuergerät dadurch initialisiert, daß zumindest zwei Schlüssel verwendet werden, die ihr bereits initialisiertes Codesignal an das Kraftfahrzeug übermitteln. Unter Initialisierung wird dabei verstanden, daß in die Steuergeräte oder Schlüssel bei deren Austausch oder Hinzufügen die für die Funktion des Diebstahlschutzsystems notwendigen Codierdaten eingeschrieben werden. Die Gesamtzahl der bereits initialisierten Schlüssel oder Steuergeräte spielt dabei keine Rolle. Lediglich für die Initialisierung eines neuen Steuergeräts oder eines neuen Schlüssels müssen zumindest zwei bereits initialisierte Schlüssel vorhanden sein.

Bei einem solchen Diebstahlschutzsystem ist es jedoch immer noch möglich, daß Versicherungsbetrug begangen wird, indem das Fahrzeug zusammen mit zwei oder mehr Schlüsseln einem Käufer gegeben wird. Gegenüber dem Fahrzeugversicherer wird behauptet, das Fahrzeug sei zusammen mit einem Schlüssel geklaut worden.

Der Erfindung liegt das Problem zugrunde, ein Verfahren zum Initialisieren eines Diebstahlschutzsystems eines Kraftfahrzeugs zu schaffen, das höchste Sicherheit vor unbefugten Initialisieren bietet.

Dieses Problem wird erfindungsgemäß durch ein Verfahren nach Patentanspruch 1 gelöst. Dabei werden alle Schlüssel und das Schloß dadurch initialisiert, daß neue Codierdaten sowohl von Codierdaten allen dem Diebstahlschutzsystem bisher zugeordneten Schlüsseln als auch von Codierdaten aus dem Schloß gebildet werden. Die neuen Codierdaten werden in allen Schlüsseln und in dem Schloß zusammen mit der Gesamtzahl aller dem Diebstahlschutzsystem zugeordneter Schlüssel gespeichert. Alle bisherigen Codierdaten werden gelöscht oder überschrieben.

Da die Gesamtzahl aller dem Diebstahlschutzsystem zugeordneter Schlüssel gespeichert wird, und dies sowohl in jedem Schlüssel als auch im Schloß, kann jederzeit von einem Dritten bei Nachweis einer Berechtigung abgefragt werden, wie viele Schlüssel dem Diebstahlschutzsystem zugeordnet waren. Ein Benutzer kann das Diebstahlschutzsystem nur initialisieren, wenn er alle Schlüssel bis auf einen vorliegen hat. Gibt der bisherige Eigentümer mehr als die gegenüber dem Fahrzeugversicherer angegebenen Menge von Schlüsseln einem Käufer mit, so kann dies einfach nachgewiesen werden.

Vorteilhafte Ausgestaltungen der Erfindung sind in den Unteransprüchen gekennzeichnet. Dabei liegen die Codierdaten in Form eines mathematischen Algorithmus oder in Form eines binär codierten Signals sowohl im Schlüssel als auch im Schloß und/oder in einer zentralen Speichereinheit vor. Die Initialisierung eines Ersatzschlüssels kann dabei nur dann vonstatten gehen, wenn mindestens die festgelegte Gesamtzahl von Schlüsseln minus einem Schlüssel beim Initialisierungsvorgang vorhanden sind.

In den Schlüsseln und in dem Schloß können auch Datum und Uhrzeit zusammen mit der Gesamtzahl der Schlüssel gespeichert werden. Dadurch werden Manipulationsversuche im nachhinein sichtbar. Die Codierdaten werden von jedem Schlüssel zum Schloß oder von einer zentralen Datenbank beim Hersteller telemetrisch zu einem Diagnosegerät und von dort zum Schloß übertragen.

Ausführungsbeispiele der Erfindung werden im folgenden anhand der schematischen Zeichnungen näher erläutert. Es zeigen:
- Figur 1: ein Blockschaltbild eines Diebstahlschutzsystems eines Kraftfahrzeugs und
- Figur 2: ein Ablaufdiagramm eines Verfahrens zum Initialisieren des Diebstahlschutzsystems.

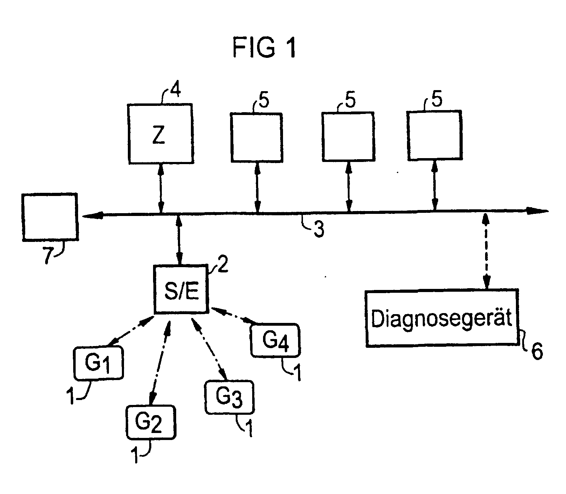

Ein Diebstahlschutzsystem für ein Kraftfahrzeug kann das bestimmungsgemäße Benutzen eines Kraftfahrzeug durch einen unberechtigten Benutzer verhindern. Um eine Berechtigung nachzuweisen (Authentifikation), benötigt ein Benutzer einen Schlüssel 1 (Figur 1). Dieser Schlüssel 1 sendet nach Aufforderung ein Codesignal drahtlos zu einem Schloß. Das Schloß weist ein Sende- und Empfangseinheit 2 auf, die mit einer oder mehreren Antennen verbunden ist. Die Sende- und Empfangseinheit 2 demoduliert das von der Antenne empfangene Codesignal und leitet es über eine Datenleitung 3 zu einem Zentralsteuergerät 4. Dort wird das Codesignal auf seine Berechtigung hin überprüft, in dem es mit einem erwarteten Sollcodesignal verglichen wird.

Um die Sicherheit weiter zu erhöhen, können weitere Steuergeräte 5 im Kraftfahrzeug in das Verfahren der Authentifikation mit eingebunden werden. Hierzu sendet das Zentralsteuergerät 4 ein Anforderungssignal über die Datenleitung 3 an die Steuergeräte 5, die mit ihrem eigenen Codesignal antworten. Nur wenn die Steuergeräte 5 richtig antworten, wird das Codesignal des Schlüssels 1 überprüft. Nachdem die Berechtigung erkannt ist, werden Türen entriegelt oder eine Wegfahrsperre gelöst.

Ein solches Diebstahlschutzsystem wird am Bandende beim Fahrzeughersteller initialisiert. Hierzu werden Codierdaten sowohl in das Zentralsteuergerät 4 und gegebenenfalls in die Steuergeräte 5 im Kraftfahrzeug als auch in alle Schlüssel 1, die dem Diebstahlschutzsystem zugeordnet sind, eingespeichert. Die Codierdaten sind individuell nur für das Diebstahlschutzsystem des Kraftfahrzeugs und enthalten einerseits einen nicht auslesbaren Geheimcode (Kryptoschlüssel) und zum anderen fahrzeugspezifische Daten sowie die Gesamtzahl der dem Diebstahlschutzsystem des Kraftfahrzeugs zugeordneten Schlüssel 1.

Zum Nachweis der Nutzungsberechtigung wird im Zentralsteuergerät 4 des Kraftfahrzeugs eine Zufallszahl erzeugt. Diese Zufallszahl wird bei Anforderung zu dem Schlüssel 1 gesendet, den der Benutzer, der Zugang begehrt, bei sich trägt. Die Zufallszahl wird auch an das Zentralsteuergerät 4 geliefert.

Im Schlüssel 1 wird mit Hilfe der Zufallszahl und des Kryptoschlüssels ein Codesignal erzeugt, das zurück über die Antenne zu dem Zentralsteuergerät 4 gesendet wird. Da in dem Zentralsteuergerät 4 der gleiche Kryptoschlüssel gespeichert ist, kann mit Hilfe der Zufallszahl ein Sollcodesignal erzeugt werden, das in dem Zentralsteuergerät 4 mit dem empfangenen Codesignal verglichen wird. Stimmen die beiden Codesignale überein, so ist die Berechtigung nachgewiesen.

Das Sollcodesignal kann auch in dem Schloß gespeichert sein. Das empfangene Codesignal wird dann mit dem gespeicherten Sollcodesignal verglichen.

Der Eigentümer des Kraftfahrzeugs bekommt beim Kauf des Kraftfahrzeugs alle dem Fahrzeug geordneten Schlüssel 1 zusammen mit dem Fahrzeugbrief ausgehändigt. Zum Benutzen des Kraftfahrzeugs benötigt er nur einen einzigen Schlüssel 1. Die restlichen Schlüssel 1 kann er zu Hause sicher aufbewahren.

Beim Diebstahl des Kraftfahrzeugs wird dieses zumeist nicht mit einem Schlüssel 1 entwendet. Bei Carjacking/Carnapping dagegen wird sich dem Fahrzeug in der Regel mitsamt dem gerade verwendeten Schlüssel 1 bemächtigt. Es ist jedoch sehr unwahrscheinlich, daß das Fahrzeug zusammen mit mehr als einem Schlüssel 1 geklaut wird. Am meisten kommt es vor, daß ein Schlüssel 1 verloren geht, für den dann ein Ersatzschlüssel gewünscht wird.

Wenn ein neuer Schlüssel 1 (Ersatzschlüssel für einen verlorenen Schlüssel 1 oder ein zusätzlich gewünschter Schlüssel 1) zu dem Diebstahlschutzsystem hinzugenommen wird, so wird dieser Schlüssel 1 zusammen mit den noch verbleibenden Schlüsseln 1 und dem Schloß, d.h. das gesamte Diebstahlschutzsystem, erneut initialisiert.

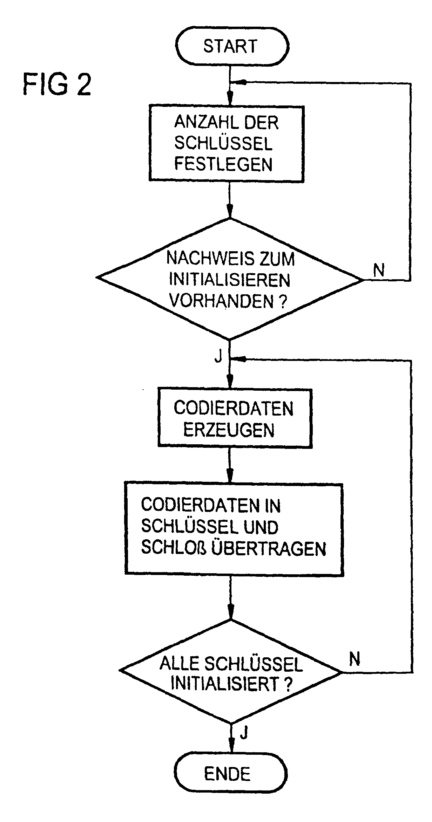

Das Verfahren zum Initialisieren wird anhand der Figur 2 näher erläutert. Dabei wird davon ausgegangen, daß das Diebstahlschutzsystem bereits am Bandende beim Fahrzeughersteller einmal initialisiert wurde.

Zunächst muß die Gesamtzahl n aller Schlüssel 1, die dem Diebstahlschutzsystem bisher zugeordnet waren, bekannt sein. Dann wird die neue Gesamtzahl. x aller Schlüssel 1 festgelegt, die dem Diebstahlschutzsystem zugeordnet werden sollen. Wenn ein Schlüssel 1 verlorengeht, so sind noch n-1 Schlüssel 1 vorhanden. Wenn nur ein neuer Schlüssel 1 hinzu kommt, so beträgt die neue Gesamtzahl x gleich der bisherigen Gesamtzahl n. Wenn überdies noch ein zusätzlicher Schlüssel 1 benötigt wird, so beträgt die neue Gesamtzahl x = n+1.

Zum Einleiten der Initialisierung ist ein Nachweis der Berechtigung (beispielsweise durch Abgabe eines Codesignals eines berechtigten Schlüssels 1) notwendig. Falls dieser Nachweis vorliegt, so können die neuen Codierdaten erzeugt werden. Hierzu sind jedoch alle vorhandenen, bisher berechtigten Schlüssel 1 und das Schloß notwendig. Von der bisherigen Gesamtzahl n der Schlüssel 1 darf nur maximal einer bei der Initialisierung fehlen, d.h. es müssen zumindest n-1 bisher berechtigte Schlüssel 1 vorliegen.

In dem Beispiel nach Figur 1 sind dem Diebstahlschutzsystem vier Schlüssel 1, und zwar die Schlüssel G₁ bis G₄ zugeordnet. Die bisherige Gesamtzahl n der Schlüssel 1 beträgt also n = 4. Falls einer der Schlüssel 1, beispielsweise der Schlüssel G₄ verlorengeht, so werden zum erneuten Initialisieren alle drei restlichen Schlüssel G₁ bis G₃ (= n-1) benötigt. Zusammen mit diesen Schlüsseln 1 kann ein oder mehrere Ersatzschlüssel initialisiert werden, so daß die neue Gesamtzahl x = 4 (oder x > 4) beträgt.

Aus den Codierdaten der drei restlichen Schlüssel G₁ bis G₃ und aus den Codierdaten im Zentralsteuergerät 4 werden neue Codierdaten erzeugt, die sowohl in allen Schlüsseln 1 (d.h. auch in die Ersatzschlüssel) als auch im Schloß abgespeichert werden. Sind nicht alle Schlüssel 1 - wie gefordert - vorhanden, so werden alle zugangsberechtigten Schlüssel 1 gelöscht, indem alle Codierdaten gelöscht werden. Somit kann mit keinem Schlüssel 1 mehr eine Berechtigung nachgewiesen werden. Dann müssen die notwendigen Codierdaten von einer beim Fahrzeughersteller befindlichen und von diesem kontrollierten Datenbank angefordert werden. Hierzu ist jedoch zunächst ein Nachweis, beispielsweise Vorlage des Fahrzeugbriefs, notwendig.

Sind alle Schlüssel 1 - wie zunächst festgelegt - mit Codierdaten versorgt, so wird auch die neue Gesamtzahl x aller dem Diebstahlschutzsystem zugeordneter Schlüssel 1 sowohl in den Schlüsseln als auch in dem Schloß gespeichert. Die Initialisierung ist beendet. Die neue Gesamtzahl x der Schlüssel 1 kann jederzeit ausgelesen, jedoch nur bei einer Initialisierung verändert (überschrieben) werden. So kann nachgewiesen werden, wie viele Schlüssel 1 dem Diebstahlschutzsystem zugeordnet waren. Die Codierdaten sind von außen nicht auslesbar, ebensowenig sind sie von außen löschbar.

Bei einem Ersatzschlüssel, kann bei der Initialisierung auch eine Benutzungsbegrenzung vorgesehen werden. Dieser Ersatzschlüssel kann beispielsweise eine beschränkte Anzahl von Startvorgängen, eine begrenzte Anzahl von gefahrenen Kilometern, nur für eine vorgegebene Zeitdauer oder für ein bestimmtes geographisches Gebiet gestattet bekommen. Dies ist vor allem für Mietwagenfirmen wertvoll.

Wenn ein Eigentümer sein Fahrzeug zusammen mit einem Schlüssel 1 verkauft, jedoch das Fahrzeug als geklaut meldet (Versicherungsbetrug), so kann der das Fahrzeug kaufende "Hehler" das Fahrzeug zwar benutzen, jedoch nur eingeschränkt. Er kann keine neuen Schlüssel 1 initialisieren, da ihm die restlichen, dem Diebstahlschutzsystem zugeordneten Schlüssel 1 fehlen. Ein Weiterverkauf ist nicht mehr lukrativ, da nur ein Schlüssel 1 zur Verfügung steht. Auch Ersatzschlüssel kann er nicht nachmachen.

Wenn der bisherige Eigentümer mehr als einen Schlüssel 1 abgibt, so kann er selber auch nicht mehr das Diebstahlschutzsystem initialisieren. Anhand der Gesamtzahl n, x können die Angaben des Eigentümers über die Zahl der vorhandenen Schlüssel 1 auf Richtigkeit überprüft werden. Fehlen mehr als ein Schlüssel 1, so liegt der Verdacht nahe, daß Versicherungsbetrug begangen wurde.

Falls der Eigentümer das Fahrzeug mit mehreren Schlüsseln 1 unberechtigter Weise verkauft (und behauptet, sein Fahrzeug sei geklaut worden), so kann dies der Fahrzeugversicherer nachweisen, indem er die Gesamtzahl der dem Kraftfahrzeug zugeordneten Schlüssel 1 überprüfen kann. Da die Gesamtzahl zusammen mit den Codierdaten immer bei jeder Initialisierung abgespeichert wird, kann durch den Fahrzeugversicherer oder durch sonstige dritte Personen (Polizei) nachgewiesen werden, wie viele Schlüssel 1 dem Diebstahlschutzsystem zugeordnet waren.

Damit festgestellt werden kann, wann das Diebstahlschutzsystem, d.h. die Schlüssel 1 und das Zentralsteuergerät 4, initialisiert wurden oder ob nach Serienauslieferung eine erneute Initialisierung stattgefunden hat, kann z.B. das Datum und die Uhrzeit der Initialisierung in einem Speicher im Schlüssel 1 und im Schloß mit der Gesamtzahl x abgespeichert werden.

Zusätzlich kann auch die Fahrgestellnummer zusammen mit den Codierdaten abgespeichert werden. Somit kann ein Schlüssel 1 eindeutig zu einem Kraftfahrzeug zugeordnet werden. Dadurch wird verhindert, daß Schlüssel 1 eines anderen Kraftfahrzeugs bei dem Fahrzeugversicherer als Nachweis der vorhandenen Schlüssel 1 abgegeben werden. Die Fahrgestellnummer wird bei der Initialisierung am Bandende in die Schlüssel 1 und das Schloß (Zentralsteuergerät 4) eingeschrieben. Bei späteren Initialisierungen wird die Fahrgestellnummer aus dem Schloß oder den noch vorhandenen Schlüsseln 1 entnommen und in die Ersatzschlüssel eingeschrieben.

Die Fahrgestellnummer kann auch bei Nachweis einer Berechtigung von der zentralen Datenbank des Herstellers über ein an das Kraftfahrzeug anschließbares Diagnosegerät 6 dem Diebstahlschutzsystem mitgeteilt werden.

In jedem Schlüssel 1 können auch benutzerindividuelle Daten gespeichert werden. Wenn der Benutzer mit seinem Schlüssel 1 Zugang zum Kraftfahrzeug begehrt, so werden diese Benutzerdaten ausgelesen. Daraufhin können dann beispielsweise Sitze und Spiegel auf den entsprechenden Benutzer automatisch eingestellt werden.

Damit das Diebstahlschutzsystem initialisiert werden kann, muß es zunächst in einen Initialisierungszustand versetzt werden. Hierzu kann beispielsweise ein externes Diagnosegerät 6 angeschlossen werden, das das Diebstahlschutzsystem durch Abgabe eines gesonderten Signals in den Initialisierungszustand versetzt. Wenn dann noch ein Schlüssel 1 sein berechtigtes Codesignal abgibt, so kann die Initialisierung erfolgen.

Die für die Initialisierung notwendigen Codierdaten können dann aus den vorhandenen Schlüsseln 1 und aus dem Zentralsteuergerät 4 ausgelesen werden. Außerdem können die Codierdaten dem Diagnosegerät 6 telemetrisch über die zentrale Datenbank übermittelt werden. Das Diagnosegerät 6 kann die neuen Codierdaten über die Datenleitung 3 (Bus) dem Zentralsteuergerät 4 mitteilen. Das Zentralsteuergerät 4 kann die Codierdaten dann über die Sende- und Empfangseinheit 2 den einzelnen Schlüsseln 1 zusenden.

Die neue Gesamtanzahl kann beispielsweise über eine Tastatur am Diagnosegerät 6 eingetippt und dem Zentralsteuergerät 4 mitgeteilt werden.

Wenn sich die zentrale Datenbank beispielsweise beim Automobilhersteller befindet, so kann jeder Initialisierungsvorgang vom Automobilhersteller überwacht werden.

Das Zentralsteuergerät 4 besteht im wesentlichen aus einem Mikroprozessor mit dazugehörigen Speichern (RAM/ROM). Die Codierdaten können in geeigneten EEPROM des Zentralsteuergerät 4 und der Schlüssel 1 gespeichert werden. Die EEPROM sind allerdings von außen nicht auslesbar. Ein Überschreiben der Codierdaten ist nur bei Nachweis einer Berechtigung möglich. Lediglich die Gesamtzahl n, x und gegebenenfalls Datum sowie Uhrzeit können ausgelesen werden.

Das Zentralsteuergerät 4 kann als separates Gerät versteckt und manipulationssicher im Kraftfahrzeug angeordnet sein. Es kann aber auch in einem der Steuergeräte 5, beispielsweise in dem Motorsteuergerät integriert sein. Das Codesignal wird drahtlos (optisch, akustisch, per Funk) vom Schlüssel 1 zum Schloß übertragen. Die Gesamtzahl x kann ebenso drahtlos zu einer Abfrageeinheit gesendet werden. Gleichermaßen kann die Gesamtzahl n, x durch unmittelbares Kontaktieren (galvanische Datenübertragung) von Lesekontakten auf den Schlüsseln 1 mit einer Lesevorrichtung ausgelesen werden. Vorteilhafterweise wird das Diagnosegerät 6 als Lesevorrichtung zum Auslesen der Gesamtzahl n, x verwendet.

Unter dem Begriff "Schlüssel 1" ist eine elektronische Einheit zu verstehen, die auf einem herkömmlichen mechanischen Tür- oder Zündschlüssel angeordnet ist. In der elektronischen Einheit sind Daten gespeichert. Der Schlüssel 1 kann sowohl Daten empfangen (drahtlos) als auch welche aussenden (drahtlos oder galvanisch). Die elektronische Einheit kann als Schlüssel 1 auch in Form einer Kreditkarte oder in sonstiger geeigneter, kleiner Bauweise vorliegen.

Unter dem Begriff "Schloß" ist die Sende- und Empfangseinheit 2 zusammen mit dem Zentralsteuergerät 4 zu verstehen. Das Zentralsteuergerät 4 ist mit Türverriegelungen 7 oder der Wegfahrsperre, die in das Motorsteuergerät integriert sein kann, verbunden. Nur bei Nachweis der Berechtigung (gültiges Codesignal) werden die Türverriegelungen 7 betätigt oder die Wegfahrsperre gelöst. Die Sende- und Empfangseinheit 2 ist mit ihrer Antenne (oder mehreren Antennen) beispielsweise an den Türschlössern, in den Außenspiegeln, an den Türverkleidungen, im Fahrzeuginneren oder auf dem Zündschloß angeordnet.

Unter dem Begriff "Initialisierung" ist ein erstmaliges oder bei Bedarf wiederholtes Abspeichern von Daten in den Schlüsseln 1 und in dem Schloß zu verstehen. Nur mit diesen Daten, die für jedes Kraftfahrzeug und gegebenenfalls für jeden Benutzer individuell sind, kann er Zugang zu dem Kraftfahrzeug erhalten und dieses auch Benutzen. Die erste Initialisierung findet am Bandende bei der Herstellung des Kraftfahrzeugs statt. Da zuvor noch kein Schlüssel 1 dem Diebstahlschutzsystem zugeordnet war, wird kein Schlüssel 1 für die erste Initialisierung benötigt.

Unter dem Begriff "Wegfahrsperre" sind alle elektronischen Eingriffe in elektronische Einheiten des Kraftfahrzeugs zu verstehen, durch die ein Starten und Wegfahren des Kraftfahrzeugs nur bei berechtigtem Codesignal ermöglicht wird. So können die Steuergeräte 5, wie das Motorsteuergerät, das Zündsteuergerät, das Getriebesteuergerät, usw. einzeln oder gemeinsam in die Wegfahrsperre eingebunden sein. Diese Steuergeräte 5 werden nur bei berechtigtem Codesignal freigegeben. Ohne Freigabe dieser Steuergeräte 5 ist eine Inbetriebnahme des Kraftfahrzeugs nicht möglich.

Unter dem Begriff "Codesignal" ist ein binär codiertes Signal zu verstehen, das moduliert übertragen wird. Je größer die Bitlänge des Signals ist, desto größer ist die Sicherheit gegen unberechtigtes Nachmachen des Codesignals. Die Sicherheit ist am größten, wenn das Codesignal mit Hilfe eine geheimen Kryptoschlüssels mit einem krytographischen Verfahren erzeugt wird.

Mit dem erfindungsgemäßen Verfahren zum Initialisieren eines Diebstahlschutzsystems eines Kraftfahrzeugs werden alle dem Fahrzeug zugeordneten Schlüssel 1 initialisiert. Bei erfolgten Fahrzeugdiebstahl kann der Fahrzeugversicherer die Gesamtzahl n, x der vorhandenen Fahrzeugschlüssel 1 in Erfahrung bringen. Diese Gesamtzahl n, x kann mit den Angaben des Eigentümers des Fahrzeugs verglichen werden. Falls sich diese Angaben nicht decken, so wird Versicherungsbetrug vermutet, der dann strafrechtlich verfolgt werden kann.

Falls das Fahrzeug tatsächlich geklaut ist, so kann der Eigentümer des Fahrzeugs alle noch vorhandenen Schlüssel 1 vorlegen. Der Fahrzeugversicherer oder der Fahrzeughersteller kann dies anhand der in den Schlüsseln 1 gespeicherten Gesamtzahl n, x und der gespeicherten Fahrgestellnummer überprüfen und bei Ungereimtheiten auf Versicherungsbetrug hin weiter nachforschen.

## Patentansprüche

1. Verfahren zum Initialisieren eines Diebstahlschutzsystems eines Kraftfahrzeugs, das eine Gesamtzahl (n) von tragbaren elektronischen Schlüsseln (1) aufweist, die jeweils für sich bei Bedarf ein Codierdaten aufweisendes Codesignal als Authentifikationsmittel aussenden, das von einem elektronischen Schloß (2, 4) im Kraftfahrzeug empfangen und zur. Auswertung mit einem gespeicherten oder in dem Schloß (2, 4) erzeugten, Codierdaten aufweisenden Sollcodesignal verglichen wird, wobei beim Initialisieren der Schlüssel (1) und des Schlosses (2, 4)
- eine neue Gesamtzahl (x) aller dem Diebstahlschutzsystem zugeordneter Schlüssel (1) festgelegt wird,
- neue Codierdaten gebildet werden, die aus Codierdaten sowohl von einer bisherigen Gesamtzahl (n) aller bisher zugeordneten Schlüssel (1) minus einem (n-1) der bisher zugeordneten Schlüssel (1) und aus Codierdaten von dem Schloß (2, 4) gebildet werden, und
- die neuen Codierdaten zusammen mit der neuen Gesamtzahl (x) sowohl in allen Schlüsseln (1) als auch in dem Schloß (2, 4) gespeichert werden, wobei alle bisher gültigen Codierdaten gelöscht oder überschrieben werden.

2. Verfahren nach Anspruch 1, **dadurch gekennzeichnet, daß** die Codierdaten in Form eines mathematischen Algorithmus oder eines binär codierten Signals sowohl im Schlüssel (1) als auch im Schloß (2, 4) und in einer zentralen Datenbank gespeichert werden.

3. Verfahren nach einem der vorhergehenden Ansprüche, **dadurch gekennzeichnet, daß** alle Codierdaten in dem Schloß (2, 4) wieder gelöscht werden, wenn nicht die festgelegte Gesamtzahl (x) von Schlüsseln (1) initialisiert wurde.

4. Verfahren nach einem der vorhergehenden Ansprüche, **dadurch gekennzeichnet, daß** die Gesamtzahl (x) der Schlüssel (1) bei Nachweis einer Berechtigung aus dem Speicher ausgelesen werden kann.

5. Verfahren nach einem der vorhergehenden Ansprüche, **dadurch gekennzeichnet, daß** das Datum und/oder die Uhrzeit zusammen mit der Gesamtzahl (x) der Schlüssel (1) sowohl im Schlüssel (1) als auch im Schloß (2, 4) gespeichert werden.

6. Verfahren nach einem der vorhergehenden Ansprüche, **dadurch gekennzeichnet, daß** die Codierdaten von jedem Schlüssel (1) oder von einem an das Kraftfahrzeug anschließbarem Diagnosegerät (6) zu dem Schloß (2, 4) übertragen werden.

7. Verfahren nach einem der Ansprüche 2-5, **dadurch gekennzeichnet, daß** die Codierdaten von der zentralen Datenbank telemetrisch zu dem Schloß (2, 4) oder dem Diagnosegerät (6) übertragen werden.

## Claims

1. Method for initialising an anti-theft system in a motor vehicle, with a total number (n) of portable electronic keys (1), which each send out a code signal containing coding data as required for authentication purposes, said signal being received by an electronic lock (2, 4) in the motor vehicle and being compared with a stored target code signal or a target code signal generated in the lock (2, 4), said target signal containing coding data, with the following taking place during initialisation of the keys (1) and the lock (2, 4)
- a new total number (x) of all keys (1) associated with the anti-theft system being declared,
- new coding data being created, which is created from coding data both from a previous total number (n) of all previously associated keys (1) minus one (n-1) of the previously associated keys (1) and from coding data from the lock (2, 4), and
- the new coding data being stored together with the new total number (x) both in all the keys (1) and also in the lock (2, 4), with all the previously valid coding data being deleted or overwritten.

2. Method according to Claim 1, **characterised in that** the coding data is stored in the form of a mathematical algorithm or a binary coded signal both in the key (1) and in the lock (2, 4) and in a central database.

3. Method according to one of the preceding claims, **characterised in that** all the coding data in the lock (2, 4) is deleted again if the declared total number (x) of keys (1) has not been initialised.

4. Method according to one of the preceding claims, **characterised in that** the total number (x) of keys (1) can be read from the storage unit with proof of authorisation.

5. Method according to one of the preceding claims, **characterised in that** the date and/or the time can be stored together with the total number (x) of keys (1) both in the key (1) and in the lock (2, 4).

6. Method according to one of the preceding claims, **characterised in that** the coding data is transmitted to the lock (2, 4) from each key (1) or from a diagnostic device (6) that can be connected to the motor vehicle.

7. Method according to one of Claims 2 to 5, **characterised in that** the coding data is transmitted telemetrically from the central database to the lock (2, 4) or the diagnostic device (6).

## Revendications

1. Procédé pour initialiser un système de protection antivol d'un véhicule automobile, qui présente un nombre total (n) de codes (1) électroniques portables, qui envoient chacun individuellement en cas de besoin un signal de code présentant des données de codage comme un moyen d'authentification, qui est réceptionné par une serrure (2, 4) électronique sur le véhicule automobile et est comparé pour l'analyse avec un signal de code de consigne mémorisé ou généré dans la serrure (2, 4) et présentant des données de codage, moyennant quoi, lors de l'initialisation des codes (1) et de la serrure (2, 4)
- un nouveau nombre total (x) de tous les codes (1) attribués au système de protection antivol est défini,
- de nouvelles données de codage sont formées, lesquelles sont constituées à partir de données de codage provenant d'un nombre total (n) ancien de tous les codes (1) attribués jusqu'ici moins un (n-1) des codes (1) attribués jusqu'ici et à partir des données de codage provenant de la serrure (2, 4), et
- les nouvelles données de codage sont mémorisées en même temps que le nouveau nombre total (x) aussi bien dans tous les codes (1) que dans la serrure (2, 4), toutes les données de codage valables jusqu'ici étant effacées ou écrasées.

2. Procédé selon la revendication 1, **caractérisé en ce que** les données de codage sont mémorisées sous la forme d'un algorithme mathématique ou d'un signal codé de façon binaire aussi bien dans le code (1) que dans la serrure (2, 4) et dans une banque de données centrale.

3. Procédé selon l'une quelconque des revendications précédentes, **caractérisé en ce que** toutes les données de codage sont effacées à nouveau dans la serrure (2, 4) si le nombre total (x) fixé de codes (1) n'a pas été initialisé.

4. Procédé selon l'une quelconque des revendications précédentes, **caractérisé en ce que** le nombre total (x) des codes (1) peut être extrait de la mémoire si l'on apporte la preuve d'une autorisation.

5. Procédé selon l'une quelconque des revendications précédentes, **caractérisé en ce que** la date et/ou l'heure sont mémorisées en même temps que le nombre total (x) des codes (1) aussi bien dans le code (1) que dans la serrure (2, 4).

6. Procédé selon l'une quelconque des revendications précédentes, **caractérisé en ce que** les données de codage sont transmises de chaque code (1) ou d'un appareil de diagnostic (6) pouvant être raccordé au véhicule automobile à la serrure (2, 4).

7. Procédé selon l'une quelconque des revendications 2 à 5, **caractérisé en ce que** les données de codage sont transmises de la banque de données centrale par télémétrie à la serrure (2, 4) ou à l'appareil de diagnostic (6).
